# EUROPÄISCHE PATENTSCHRIFT

(11) **EP 2 709 785 B1**
(45) Veröffentlichungstag und Bekanntmachung des Hinweises auf die Patenterteilung: **23.03.2016**
(21) Anmeldenummer: 12724300.4
(22) Anmeldetag: 16.05.2012
(51) Int. Cl.: B23B 5/18, B24B 5/42

(54) **VERFAHREN ZUR BEARBEITUNG EINER KURBELWELLE**
METHOD FOR MACHINING A CRANKSHAFT
PROCEDE POUR L'USINAGE D'UN VILEBREQUIN

(30) Priorität: 17.05.2011 DE 102011076007; 31.05.2011 DE 102011076809
(43) Veröffentlichungstag der Anmeldung: 26.03.2014
(73) Patentinhaber: Erwin Junker Maschinenfabrik GmbH, 77787 Nordrach (DE)
(72) Erfinder: JUNKER, Erwin, 77815 Bühl/Baden (DE)
(74) Vertreter: Leske, Thomas
(86) Internationale Anmeldenummer: PCT/EP2012/059182
(87) Internationale Veröffentlichungsnummer: WO 2012/156469

(56) Entgegenhaltungen:
- WO-A1-03/022521
- DE-A1-102010 025 132
- DE-B1- 2 836 598
- FR-A1- 2 779 075
- JP-A- 59 107 801

## Beschreibung

Die Erfindung betrifft ein Verfahren zur Komplettbearbeitung zumindest von unbearbeiteten Zapfen und Planschultern geschmiedeter oder gegossener Rohlinge einer Kurbelwelle.

Da Kurbelwellen ein zentrales Bauelement insbesondere bei Hubkolben-Verbrennungskraftmaschinen darstellen und diese Art von Verbrennungskraftmaschinen seit Jahrzehnten erfolgreiche Anwendung gefunden hat, hat sich auch die Fertigungstechnik ebenso lange mit einer Verbesserung nicht nur der Genauigkeit bei der Herstellung sondern auch der Ökonomie der Herstellung befasst.

Eine Schwierigkeit bei der Komplettbearbeitung von Kurbelwellen besteht darin, dass die häufig als Schmiedeteile oder Gussteile gelieferten Kurbelwellenrohlinge einer Bearbeitung nicht nur der Haupt- und Hublagerzapfen, sondern auch der Planseiten der Wangen, der stimseitigen Planseiten sowie eines Anschlussflansches und von Zentrier- und/oder Ölversorgungsbohrungen unterzogen werden müssen.

Die geschmiedeten oder gegossenen Rohlinge weisen ein relativ großes Aufmass, insbesondere an den entscheidenden Stellen wie beispielsweise Hauptlager, Hublager, Planschultern, Passlager auf, welches durch eine mechanische Bearbeitung abgetragen werden muss. Damit ein Rohling einer nachfolgenden mechanischen Bearbeitung überhaupt unterzogen werden kann, muss dieser Rohling an seinen Enden planseitig bearbeitet werden, und es müssen dort Zentrierbohrungen eingebracht werden. Dies ist erforderlich, damit die zu bearbeitende Kurbelwelle im Interesse einer zu erzielenden hohen Fertigungsgenauigkeit exakt und wiederholbar auf den jeweiligen Bearbeitungsmaschinen eingespannt werden kann.

Rohlinge im Sinne dieser Erfindung sind geschmiedete oder Gussrohlinge, welche lediglich an deren Enden planseitig bearbeitet sind und Zentrierbohrungen aufweisen.

Bei den Rohlingen einer Kurbelwelle müssen Hauptlager, Hublager, Einstiche und Hinterstiche, Passlager, Flansch- und Zapfendurchmesser, gegebenenfalls konzentrische Profile sowie Wangenseitenflächen und Wangenaußendurchmesser einschließlich Fasen mechanisch bearbeitet werden. Hinzu kommt noch, dass Kurbelwellen mit Ölbohrungen versehen werden müssen, so dass zahlreiche Fertigungsschritte nötig sind, um aus einem geschmiedeten oder gegossenen Kurbelwellenrohling ein fertiges, komplett bearbeitetes Bauteil zu machen.

Der Gang der technischen Entwicklung bezüglich der Fertigungstechnik von Kurbelwellen orientierte sich dabei darauf, die verschiedenen technologischen Fertigungsoperationen wie Fräsen, Drehen, Schleifen und Bohren weitestgehend zusammenzufassen, und zwar nach Möglichkeit auf einzelnen Fertigungszentren. In diese Entwicklung eingebettet war auch der Trend, vor allen Dingen wegen der damit erzielbaren hohen Fertigungsgenauigkeit, den Anteil der Schleifoperationen an der Anzahl der Operationen zur kompletten Herstellung der Kurbelwelle zu erhöhen. Dennoch werden in Fertigungslinien zur Kurbelwellenkomplettbearbeitung Dreh- und Schleifmaschinen zusammengefasst, um insbesondere jene Operationen, welche günstiger durch Drehen hergestellt werden können, auf einer Drehmaschine, jedoch jene Operationen, welche genauer und besser auf Schleifmaschinen herstellbar sind, auf eben diesen Schleifmaschinen durchzuführen.

Wegen der relativ großen Aufmaße, welche durchaus bis zu 5 mm und mehr betragen können, ist die Bearbeitung einer Kurbelwelle je nach Ausführung, Größe, Härte, Art und Losgröße unterschiedlich. In jedem Fall beginnt die Bearbeitung mit einer Grobbearbeitung, bei welcher beispielsweise die Kurbelwelle an den Enden auf die richtige Länge gefräst wird und an diesen Enden auch Zentrierbohrungen eingebracht werden. Daran schließt sich eine Bearbeitung der Hauptlagerflächen und auch der Hublager an. Als Bearbeitungstechniken werden für diese Grobbearbeitung das Drehen und Fräsen, insbesondere Wirbeifräsen, sowie Drehräumen in großem Maße angewandt. Für die Hauptlagerflächen kann zum Beispiel auch ein Grobschleifen erfolgen. Hublager werden überwiegend gefräst. Drehräumen und auch Schleifen werden ebenfalls eingesetzt.

Zu einer Komplettbearbeitung einer Kurbelwelle gehören zahlreiche weitere Verfahrensschritte wie das Bohren von Ölkanälen, welches beispielsweise in einer Tiefenbohrtechnik realisiert werden kann, das Induktionshärten zur Verbesserung der Verschleißfestigkeit, indem die Lagerlaufflächen gehärtet und die Dauerfestigkeit durch Erzeugen von Restdruckspannungen insbesondere bei den Radien erhöht wird. Dieser Vorgang wird durch Erwärmen, Abschrecken und Vergüten realisiert. Weitere technologische Verfahren sind das Rollen der Radien bzw. das Radieninduktionshärten zur Erhöhung der Dauerfestigkeit. Ebenso kann das Nitrieren einer fertig bearbeiteten Kurbelwelle zur Verbesserung des Verschleiß- und Ermüdungsverhaltens eingesetzt werden. Haupt- und Hublager werden häufig auch geschliffen wie ebenso die Enden der Kurbelwellen, d. h. deren Zapfen und Flanschenden. Das Schleifen hat insbesondere Vorteile bezüglich Rundheit, Oberflächenqualität, Geradheit, gegebenenfalls Konizität, Maßhaltigkeit etc.

Unter Komplettbearbeitung soll im Rahmen der vorliegenden Erfindung ein komplettes Bearbeiten von unbearbeiteten zentrischen Zapfen wie auch unbearbeiteten Hublagerzapfen sowie deren jeweiligen, die Zapfen umgebenden ebenfalls unbearbeiteten Planschultern, von geschmiedeten oder gegossenen Rohlingen einer Kurbelwelle verstanden werden. Die Erfindung schließt zwar sämtliche Vorgänge für das komplette Bearbeiten einer Kurbelwelle im weitesten Sinne ein, der Kern der Erfindung erstreckt sich jedoch auf das vorstehend genannte Bearbeiten von Zapfen und Planschultern an geschmiedeten oder gegossenen Rohlingen einer Kurbelwelle.

Im Stand der Technik ist es prinzipiell bekannt, Planseiten drehend zu bearbeiten (s.beispielsweise US 2009/0249026 A1). Diese Bearbeitungen werden bei bekannten Anlagen auch mittels Wirbelfräsen oder Drehräumen realisiert. Dabei sind Hartmetall oder polykristalline Diamantplättchen auf einer Scheibe angeordnet. Mit derartigen Maschinen können jeweils eine oder zwei Lagerstellen bei Verwendung von Maschinen mit einem oder mit zwei Werkzeugspindelstöcken nacheinander und teilweise zeitparallel bearbeitet werden. Derartige Maschinen sind nicht nur in der Beschaffung kostenintensiv, durch die Einzellagerbearbeitung ergeben sich auch längere Bearbeitungszeiten, so dass für bekannte Kurbelwellen-Fertigungslinien eine erhebliche Anzahl dieser Maschinen erforderlich ist, was die Kurbelwellenfertigung insgesamt sehr kostenintensiv gestaltet. Ein Beispiel eines bekannten Verfahrens ist in der DE 10 2010 025 132 A1 offenbart.

Das Wirbelfräsen oder Drehräumen hat bei der Kurbelwellenfertigung große Verbreitung gefunden. Die Nachteile dieser Verfahren, d. h. des Wirbelfräsens oder Drehräumens, bestehen oft darin, dass diese Verfahren prinzipiell trocken durchgeführt werden, d. h. eine Kühlflüssigkeit wird nicht eingesetzt. Die Werkzeuge für das Drehräumen und Wirbelfräsen sind darüber hinaus sehr kompliziert, weil es sich dabei um scheibenartige Bauteile handelt, welche an den Stirnseiten im Umfangsbereich, die eigentliche spanabhebende Funktion realisierende Plättchen auf weisen. Diese Plättchen müssen nun sehr genau individuell justiert werden, damit während der spanabhebende Bearbeitung eine möglichst gleichmäßige Materialabtragung realsiert wird und andererseits die Plättchen auch gleichmäßig belastet werden. Da diese Plättchen in definierten Abständen am Umfang angeordnet sind, entsteht auch eine relativ unsaubere Oberflächenkontur, welche auch als schuppenartig bezeichnet werden kann. Das Ergebnis der Grobbearbeitung hat unter diesen Umständen negativen Einfluss auf die sich daran anschließenden Feinbearbeitungsvorgänge, weil die dafür verwendeten Werkzeuge zunächst die rauhe und unebene Oberfläche ausgleichen müssen. Das wiederum setzt voraus, dass ein relativ großes Aufmaß für die Endbearbeitung im Ergebnis der Grobbearbeitung beibehalten werden muss. Die für das Wirbelfräsen oder Drehräumen verwendeten Werkzeuge benötigen darüber hinaus lange Zeiten, um die verschlissenen Plättchen komplett auszutauschen. Dafür sind häufig mehrere Stunden erförderlich. Dies führt zu einem Verteuern des Herstellungsprozesses. Da Kurbelwellen jedoch häufig in Serienfertigung gefertigt werden, muss nach kostengünstigen Lösungen gesucht werden.

Während der Grobbearbeitung wird bekanntermaßen relativ viel Material abgetragen, was insbesondere bei Verfahren mit einer Trockenbearbeitung zu einem hohen Wärmeeintrag in die zu bearbeitende Kurbelwelle führt. Dieser hohe Wärmeeintrag führt neben den hohen Bearbeitungskräften infolge des Eingriffs der Werkzeuge am zu bearbeitenden Bauteil zu einer Deformation des Bauteils mit nachteiligem Einfluss auf die spätere zu erreichende Genauigkeit. Der Wärmeeintrag in die Kurbelwelle infolge der Grobbearbeitung führt des Weiteren zum Freisetzen von Spannungen im Bauteil, welche ebenfalls zu Verzügen des Bauteils führen. Darüber hinaus führen die Grobbearbeitungen zu deutlich höheren Belastungen der Werkzeuge in diesem technologischen Schritt im Vergleich zur Fein- bzw. Endbearbeitung.

Daher ist versucht worden, das Wirbelfräsen und Drehräumen durch Schleifoperationen zu ersetzen. Bei der Bearbeitung von derartigen Rohlingen ist jedoch zu beachten, dass wegen des erforderlichen großen Materialabtrags Vorschleifoperationen in der Regel mit relativ hohen Schleifscheibenabnutzungen verbunden sind (insbesondere an den Planseiten).

Das Schleifen selbst wird in aller Regel als nasser Bearbeitungsvorgang durchgeführt, weil mit Kühlschmierstoff gearbeitet wird. Damit wird durch das Schleifen weniger Wärme in das Bauteil eingebracht, und auch die Bearbeitungskräfte sind geringer, sodass die Deformationen infolge der Verarbeitung an der Kurbelwelle beim Schleifen reduziert werden können. Dies hat direkten positiven Einfluss auf die Genauigkeit der Kurbelwelle, sodass auch ein besserer Rundlauf einer fertigen Kurbelwelle erzielbar ist.

Dies ist besonders kritisch beim Bearbeiten der Planschultern der zentrischen Zapfenbereiche, weil diese Planschultern eine deutlich größere Höhe aufweisen als die Planschultern an den Hublagerzapfen der Kurbelwelle. Für die Wirbelfräsverfahren bzw. Drehräumverfahren bedeutet dies, dass die zahlreichen am Außenumfang der Werkzeuge angeordneten Schneidplättchen beim Bearbeiten der Planschultern eine starke einseitige Belastung erfahren, während große Teile dieser Schneidplättchen während des Bearbeitens der Planschultern überhaupt noch nicht im Eingriff mit dem zu schleifenden Werkstück, der Kurbelwelle, sind. Dadurch verschleißen die Bearbeitungswerkzeuge relativ rasch und müssen in vergleichsweise kurzen Intervallen mit neuen Schneidplättchen bestückt werden. Dies führt zu einer Verteuerung des Herstellungsprozesses, weil die Neubestückung ein zeitaufwendiger Vorgang ist. Erst nachdem die Planschultern komplett bearbeitet worden sind, greifen die übrigen Bereiche der Wirbelfräs- bzw. Drehräumwerkzeuge in die Bearbeitung ein, indem sie die unmittelbaren Zapfenbereiche bearbeiten. Wie zuvor bereits beschrieben ist das Ergebnis der Drehräum- bzw. Wirbelfräsbearbeitung eine relativ "schuppige" Oberfläche. Eine derartige unregelmäßige und relativ rauhe Oberfläche hat für nachfolgende Fertigbearbeitungsvorgänge erhebliche Nachteile. Werden die Fertigbearbeitungsvorgänge wie üblich durch Schleifen realisiert, so müssen die dort eingesetzten Werkzeuge in eine relativ unebene und rauhe Oberfläche eingreifen, was einen erhöhten Verschleiß der dafür eingesetzten Schleifscheiben nachsichzieht. Wegen der nur relativ rauhen Oberfläche, welche durch dieses Vorbearbeiten durch Wirbelfräsen bzw. durch Drehräumen erreicht werden kann, muss auch ein relativ großes Aufmaß gegenüber dem zu erzielenden Endmaß nach der Grobbearbeitung beibehalten werden, damit sämtliche Fehler im Wege der Endbearbeitung noch ausgeglichen werden können. Die so bearbeiteten Kurbelwellenrohlinge werden auch als vorbearbeitete Kurbelwellen bezeichnet. Für diese vorbearbeiteten Kurbelwellen wird dann eine übliche Fertigbearbeitung in der Gestalt durchgeführt, dass zunächst ein Vorschleifen durchgeführt wird, woran sich ein Fertigschleifen bzw. Feinschleifen anschließt. Diese beiden Verfahren werden in der Regel durch zwei unterschiedliche Schleifscheiben durchgeführt, weil zum einen noch ein relativ großes Aufmaß abzuschleifen ist, was für eine Feinschleifmaschine eine zu große Belastung darstellen würde, und weil zum anderen die Oberfläche relativ rauh ist, was ebenfalls zu einem relativ raschen Verschleiß einer Feinschleifscheibe führen würde, mit dem negativen Ergebnis, dass die hohen Qualitätsanforderungen an eine Kurbelwelle nicht oder nur schwer erreichbar wären.

Zwar ist versucht worden, diese Nachteile zu minimieren, indem gemischte Verfahren zur Bearbeitung von Kurbelwellenrohlingen, d. h. Verfahren, welche aus Drehräumen und Wirbelfräsen sowie Schleifen bestehen, miteinander in der Gestalt zu kombinieren, dass bei einem Hauptlager die Planseiten mittels Wirbelfräsen bzw. Drehräumen bearbeitet worden sind, woran sich ein Schleifen des Hauptlagerzapfens anschloss, damit eine Lünette für die weiteren Bearbeitungsvorgänge dort angestellt werden kann. Doch diese kombinierten Verfahren behalten letztendlich die Nachteile bei, welche sich in Verbindung mit dem Wirbelfräsen und Drehräumen am Bauteil direkt niederschlagen. Dies sind die hohen Belastungen auch infolge der Trockenbearbeitung, die hohe Oberflächenrauhigkeit und die Deformationen der Kurbelwelle infolge dieser Bearbeitung.

Um die vorstehend genannten Nachteile der bisher gängigen Bearbeitungsverfahren für Kurbelwellen bei der Grobbearbeitung wie Drehräumen und Wirbelfräsen zu beseitigen, ist versucht worden, die Kurbelwellen komplett zu schleifen, d. h. die Grobbearbeitung durch ein Grobschleifen zu realisieren.

Im Vordergrund stand bei den bekannten Herstellungsverfahren für Kurbelwellen, bei denen die Kurbelwellenrohlinge bereits grob vorbearbeitet sind; d. h. bei denen sowohl Planflächen als auch Zapfenbereiche beispielsweise auch grobvorgeschliffen worden sind, dennoch die Fertigbearbeitung der Hub- wie auch der Hauptlagerzapfen sowie der Planschultern auf einer Fertigschleifmaschine, welche die Vorgänge des Vorschlefens, und des Fertigschleifens realisiert. Bereits die Reihenfolge der Bearbeitung von Hublagerzapfen und Hauptlagerzapfen hat einen Einfluss auf die später zu erzielende Genauigkeit. Damit ist diesem Verfahrensabschnitt nicht nur bisher höchste Aufmerksamkeit gewidmet worden, es sind sogar auch zur Durchführung dieser komplexen Schleifvorgänge spezielle Schleifscheiben entwickelt worden, einschließlich solcher Schleifscheiben, bei denen eine Nachjustierung der Schleifscheibenbreite, möglich, war. Dies zeigt, dass zur Sicherstellung vor allem der Qualität der Kurbelwellen insbesondere die Schleifoperationen perfektioniert worden sind.

Trotz dieser perfektionierten Herstellungsweise im Bereich des Schleifens ist festgestellt worden, dass insbesondere die Schleifscheibenabnutzung infolge des Schleifens von Planschultern und Lagerzapfen unbefriedigend hoch ist. Dies trifft insbesondere für die großen Planschultern an den zentrischen Zapfenbereichen und insbesondere dabei für den Vorgang des Grobschleifens zu. Dieses Grobschleifen wurde durch ein Einstechschleifen realisiert, sodass beide den jeweiligen Zapfen zwischen sich einschließenden Planschultern gleichzeitig geschliffen wurden. Wenn die Schleifscheibe nun zum Zwecke des Schleifens der Planschultern in diesen Bereich einsticht, werden im Grunde genommen nur die unmittelbaren Kantenbereiche der Schleifscheibe dann aber höchstbelastet, während die über der Breite der Schleifscheibe dazwischen angeordneten Schleifkörner keinerlei Schleifarbeit zu verrichten haben. Dies führt zu einem hohen Verschleiß der Grobschleifscheiben, sodass die Standzeit dieser Schleifscheiben unvertretbar gering ist. Man hat bei dieser Art von Grobschleifen daher nur so viel wie unbedingt nötig vom Aufmaß an den zentrischen Lagerstellen abgeschliffen, was zur Folge hat, dass für die Fertigbearbeitung noch ein erhebliches Aufmaß verbleibt. Verbesserte Schleifscheibenmaterialien haben nicht ausreichend Abhilfe bei diesem Problem geschaffen.

Die erheblichen Nachteile hinsichtlich Genauigkeit, benötigter Leistung und Taktzeit sowie Kosten der Verfahren Drehräumen und Wirbelfräsen, Grobschleifen sowie deren Kombination erfüllen daher nicht die insbesondere für Serienfertigung bestehenden Forderungen.

Der Erfindung liegt daher die Aufgabe zugrunde, ein Verfahren zur Komplettbearbeitung von allenfalls an den Enden planseitig vorbearbeiteten Kurbelwellenrohlingen sowie eine zur Durchführung des Verfahrens erforderliche Fertigungslinie mit den entsprechenden Fertigungsoperationen für eine Serienfertigung derart bereitzustellen bzw. zu optimieren, dass der Werkzeugverschleiß sowie die Werkzeugkosten und damit die Stückkosten der Kurbelwellen verringert werden und der gesamte Herstellungsprozess kostengünstiger erfolgen kann, und zwar bei hoher Herstellungsgenauigkeit der Kurbelwellen.

Diese Aufgabe ist durch ein Verfahren gemäß dem Anspruch 1 gelöst.

Überraschenderweise hat sich erfindungsgemäß gezeigt, dass - entgegen dem bisherigen Gang der technischen Entwicklungen - durch ein Trennen bzw. ein Aufteilen der verschiedenen Schritte des gesamten Herstellungsprozesses, und zwar in Abkehr vom bisher üblichen Vorgehen, Abhilfe für die genannten Probleme geschaffen werden kann, indem vor allem der Teil der Grobbearbeitung des Grobschleifens, Drehräumens oder Wirbelfräsens, welcher das Schleifen der großen Planschultern an den zentrischen Zapfen beinhaltet, statt dessen einem normalen Drehvorgang unterzogen wird. Da die Grobschleifscheiben und die Werkzeuge für das Drehräumen bzw. Wirbelfräsen nun nicht mehr zum Bearbeiten der Planschultern an den zentrischen Zapfenbereichen eingesetzt werden müssen, erhöht sich deren Standzeit erheblich. Die Werkzeuge erfahren aber auch eine gleichmäßigere Belastung, da beim Grobbearbeiten nur der Zapfen die Schnittplättchen bzw. die Schleifscheibenkörner sofort und sämtlich in Eingriff gelangen. Einen besonderen Vorteil bietet das Grobschleifen insbesondere der zentrischen Zapfen, nachdem deren Planschultern gedreht worden sind. Beim Grobschleifen kann die Schnittgeschwindigkeit gegenüber dem Drehfräsen bzw. Drehräumen, wobei beim Drehräumen ein feststehendes Werkzeug vorhanden ist, deutlich gesteigert werden. Trotz der erhöhten Schnittgeschwindigkeit ist der Wärmeeintrag beim Schleifen erheblich geringer, wodurch die Kurbelwelle eine geringere Deformation erfährt und wodurch neben einer glatteren und gleichmäßigeren Oberfläche auch ein geringerer Rundlaufschlag erzielt werden kann. Bei dem erfindungsgemäßen Grobschleifen lediglich der zentrischen Zapfenbereiche am Rohling kann damit auch wegen des Schleifens unter Zufuhr von Kühl- und Schleiföl ein größerer Teil des Aufmaßes geschliffen werden, welches am unbearbeiteten Rohling vorhanden ist. Das bedeutet, dass mit dem erfindungsgemäßen Verfahren die Grobbearbeitung bis weit in den Teil des Aufmaßes hinein durchgeführt werden kann, welches bisher für das bekannte Fertigschleifen vorgesehen sein musste. Damit entlastet das Grobschleifen nicht nur die Werkzeuge beim Fertigschleifen, beim Fertigschleifen muss daher auch erheblich weniger Material abgetragen werden, um auf Endmaß zu schleifen. Deshalb kann beim Fertigschleifen dieses in einem Zuge erfolgen, sodass die bisher übliche Aufteilung in Vorschleifen mit einer Vorschleifscheibe und Fertigschleifen mit einer Fertigschleifscheibe oft nicht mehr erforderlich ist. Vielmehr kann in einem Zuge mit einer einzigen Feinbearbeitungsschleifscheibe geschliffen werden, ohne dass diese überlastet wird. Dadurch, dass beim Feinschleifen weniger Aufmaß abzutragen ist, vermindern sich auch die Belastungen auf die Kurbelwelle während des Fertigschleifens, was direkt positiven Einfluss auf die erzielbare Qualität der Kurbelwelle hat.

Die erfindungsgemäße Kombination von Drehen der Planschultern und Grobschleifen der Zapfenbereiche wird durch eine intelligente Aufteilung dieser Fertigungsprozesse im Sinne einer Verformungsoptimierung der Kurbelwelle während der Bearbeitung und im Sinne einer Aufmaßoptimierung durchgeführt. Bezüglich des technologischen Ablaufs wird erfindungsgemäß nun das gedreht (die Planschultern der zentrischen Zapfen), was durch Drehen optimal hinsichtlich Werkstückverformung, Wärmeeintrag, Bearbeitungsgenauigkeit deutlich effektiver herstellbar ist, wohingegen der Rest der Bearbeitung von hohen Belastungen entlastet wird. Es wird also bezüglich des technologischen Ablaufs das Drehen bewusst wieder eingesetzt und aus einer kompletten Schleifbearbeitung sozusagen herausgelöst, um den Gesamtfertigungsprozess insgesamt kostengünstiger und mit höherer Qualität des Werkstückes durchführen zu können. Das Schleifen wird mittels einer Grobschleifbearbeitung insgesamt genauer durchgeführt werden als eine Bearbeitung mittels Schleifens von Planschultern und Zapfenbereichen in einem Zuge im Wege eines Einstechschleifvorganges.

Bei den Hublagern bleibt es dagegen beim Grobschleifen sowohl der dortigen Planschultern wie auch der Hüblagerzapfen. Zum einen würde sich eine Maschine zum Drehen eines sich exzentrisch bei Rotation der Kurbelwelle bewegenden Abschnittes schwierig gestalten, zum anderen sind die Planschultern an den Hubzapfen deutlich kleiner als die an den zentrischen Zapfen. Hinzu kommt, dass bei den Hublagern wegen des auftretenden Winkelfehlers von vornherein ein etwas größeres Aufmaß nach der Grobbearbeitung beibehalten werden muss. Dieser Winkelfehler muss bei der Fertigbearbeitung noch ausgleichbar sein. Auch deshalb ist es tolerierbar, die Planschultern gleich mitzuschleifen, da der negative Einfluss des Verschleißes der Schleifscheibe bei den Hublagern deutlich geringer ausfällt. Im Sinne der Gesamtprozessoptimierung wird dies in Kauf genommen.

Grobschleifen im Sinne der vorliegenden Erfindung ist demgemäß das aufmaßoptimierte Bearbeiten der zentrischen Zapfen und damit das Entlasten des danach durchzuführenden Fertigschleifvorganges. Bei den geschmiedeten oder gegossenen Rohlingen sind Aufmaße von teilweise mehr als 5 mm durchaus üblich. Bei bekannten Verfahren, bei denen man vorgefertigte Kurbelwellen bearbeitet, wurde die Vorbearbeitung der Zapfen soweit vorgenommen, dass für die Fertigbearbeitung noch ein Aufmaß von beispielsweise 1,8 bis 2 mm abzutragen war. Bei der vorliegenden Erfindung wird die Grobbearbeitung bis in einen Bereich von beispielsweise 0,5 bis 0,7 mm Aufmaß gegenüber dem Endmaß durchgeführt. Als Fertigschleifvorgang bleibt ein nahezu reiner Feinschleifvorgang, ohne dass ein Vorschleifen durchgeführt werden muss. Beim Fertigschleifen gemäß der Erfindung werden gegebenenfalls anzupassende Modifikationen der Schleifbedingungen lediglich über Zustell- und Schnittgeschwindigkeit der Fertigschleifmaschine realisiert.

Der Vorteil des erfindungsgemäßen Verfahrens liegt also unter anderem in der Optimierung der Fertigungsvorgänge dahingehend, dass die deutlich geringere Größe der Planschultern der Hublager weiterhin komplett durch Schleifen realisiert werden kann, wohingegen die deutlich höheren Planschultern der zentrischen Zapfen anstelle eines Vorschleifens, Drehräumens oder Wirbelfräsens jetzt vorgedreht werden. Damit wird der erfindungsgemäße Effekt am größten, ohne dass Genauigkeit und Fertigungszeit bzw. Fertigungsaufwand verlorengehen. Hierdurch wird erreicht, dass die zentrisch angeordneten hohen Planschultern mittels kostengünstigen Werkzeugen vorzugsweise zeitparallel hergestellt werden können.

Das erfindungsgemäße Verfahren verwirklicht eine Komplettbearbeitung von geschmiedeten oder gegossenen Rohlingen einer Kurbelwelle, wobei zumindest die unbearbeiteten zentrischen Zapfen und Hublagerzapfen sowie deren jeweilige, die Zapfen umgebende, d. h. zwischen sich einschließende Planschultern komplett bearbeitet werden. Unter Komplettbearbeitung wird daher insbesondere für die genannten Abschnitte der Kurbelwelle eine Bearbeitung von der Rohkontür des Rohlings der Kurbelwelle bis zu deren Endmaß verstanden. Erfindungsgemäß werden die den zentrischen Zapfen zugeordneten Planschultern gedreht. Das Drehen erfolgt dabei mittels herkömmlicher Drehwerkzeuge, welche feststehend sind und zum Zwecke des Drehens mit der rotierenden Kurbelwelle in Eingriff gebracht werden. Danach werden die zentrischen Zapfen sowie die Hublagerzapfen und deren Planschultern grobgeschliffen. Das Schleifen der zentrischen Zapfen erfolgt nun so, dass dabei die Schleifscheibe nicht mehr in Eingriff mit den dort vorhandenen Planschultern gelangt. Dadurch wird die Schleifscheibe erheblich entlastet und kann das Aufmaß am Rohling bis näher an das Endmaß heran grobschleifen. Nach dem Grobschleifen der Zapfen verbleibt somit ein Aufmaß, das kleiner ist als ein für ein übliches bekanntes Fertigschleifen von Zapfen und Planschultern erforderliches Aufmaß. Bezüglich des Aufmaßes, welches mit dem erfindungsgemäßen Grobschleifen und dem erfindungsgemäßen Fertigschleifen abgetragen wird, sind also diese beiden Vorgänge mit den im Stand der Technik eingesetzten Vorgängen nicht zu vergleichen. Um das durch das erfindungsgemäße Grobschleifen gegenüber dem bekannten Aufmaß mehr abgetragene Aufmaß ist das erfindungsgemäße Fertigschleifen gegenüber dem üblichen Fertigschleifen entlastet.

Die Komplettbearbeitung wird nun abgeschlossen, indem nach dem Grobschleifen die zentrischen Zapfen und die Hublagerzapfen und vorzugsweise auch die Hublagerplanschultern von dem durch das Grobschleifen erreichten bzw. belassenen kleineren Aufmaß auf Endmaß fertiggeschliffen werden. Auf Basis des erfindungsgemäßen aufmaßoptimierten Komplettbearbeitens zumindest der Zapfen und Planschultern geschmiedeter oder gegossener Rohlinge einer Kurbelwelle wird neben einer deutlichen Verringerung der Taktzeit bei der Herstellung einer Kurbelwelle auch eine höhere Genauigkeit derselben erzielt. Besonders bevorzugt ist, wenn die Hublagerplanschultern beim Grobschleifen bereits auf Endmaß geschliffen werden.

Indem die Planschultern, insbesondere der zentrischen Zapfen und insbesondere aller Zapfen, gleichzeitig gedreht werden, kann die Fertigurigszeit weiter herabgesetzt werden. Durch das gleichzeitige Drehen aller. Planschultern, insbesondere der zentrischen Zapfen, kann die während der Bearbeitung der Kurbelwelle auf die Kurbelwelle ausgeübte Belastung weiter reduziert werden, was sich positiv auf ihre Qualität auswirkt.

Vorzugsweise werden die Planschultern der zentrischen Zapfen gruppenweise gedreht. Eine erste Gruppe wird dabei durch Zustellung der Drehwerkzeuge von einer ersten Seite der Kurbelwelle aus und eine zweite Gruppe von einer zweiten der ersten Seite gegenüberliegenden Seite der Kurbelwelle aus gedreht. Das gruppenweise, gleichzeitige Drehen der Planschultern von zwei gegenüberliegenden Seiten der Kurbelwelle aus hat den Vorteil, dass beim Drehen in das Werkstück eingeleitete Bearbeitungskräfte zumindest in gewissem Maße kompensiert werden können.

Vorzugsweise können die beiden Gruppen jeweils alle Planschultern der zentrischen Zapfen umfassen. Das bedeutet, dass sämtliche Planschultern mit Drehwerkzeugen von beiden Seiten der Kurbelwelle aus gedreht werden können, sodass eine nahezu perfekte Kompensation der in das Werkstück eingeleiteten Drehkräfte möglich ist.

Um noch mehr Taktzeit einzusparen, werden vorzugsweise alle zentrischen Zapfen gleichzeitig geschliffen. Dazu wird eine der Anzahl der gleichzeitig zu schleifenden zentrischen Zapfen entsprechende Anzahl von Schleifscheiben gleichzeitig in Eingriff gebracht.

Vorzugsweise weisen die Werkzeuge zum Drehen Wendeschneidplatten aus Hartmetall oder polykristallinem Diamant auf; das Schleifen wird mittels galvanisch beschichteter Schleifscheiben oder keramisch gebundener CBN-Schleifscheiben durchgeführt.

Vorzugsweise werden bei dem erfindungsgemäßen Verfahren die Drehwerkzeuge entlang einer Seite der Kurbelwelle als erstes Set in Eingriff gebracht und durch das Drehen die Planschultern und Freistiche am Übergang zwischen den Lagerzapfen und den jeweiligen Planschultern gedreht. Unter "voreingestellte Drehwerkzeugen" soll verstanden werden, dass mit den Drehwerkzeugen in einem einzigen Drehvorgang bei - bezogen auf die Drehachse der Kurbelwelle - radialer Zustellung der Drehwerkzeuge das geforderte Maß, und zwar entweder das Endmaß nach Vordrehvorgang oder das Fertigmaß nach Enddrehvorgang, erreicht wird.

Zur weiteren Verbesserung des erfindungsgemäßen Verfahrens wird vorzugsweise dem ersten Set von Drehwerkzeugen entlang einer diesem gegenüberliegenden Seite der Kurbelwelle ein zweites Set von Drehwerkzeugen eingesetzt, das zeitparallel zum ersten Set in Eingriff gebracht wird und die Planschultern und Freistiche dreht. Durch das gegenüberliegende Anordnen von einer Reihe von Drehwerkzeugen kann nicht nur die mechanische Belastung der Drehwerkzeuge optimiert werden, die durch die Drehwerkzeuge auf das Bauteil eingeleiteten Kräfte können auch gegenseitig kompensiert werden, so dass die Kurbelwelle während der Bearbeitung einer minimierten Biegebelastung ausgesetzt ist. Dadurch lässt sich auch die Fertigungsgenauigkeit an der Kurbelwelle erhöhen. Das jeweilige Set ist auf einem Träger angeordnet.

Die für das Drehen eingesetzten Wendeschneidplatten aus Hartmetall oder polykristallinem Diamant haben den Vorteil, dass nicht alle Drehwerkzeuge ausgewechselt werden müssen, wenn diese verschlissen sind, sondern dass lediglich die den unmittelbaren Drehvorgang realisierenden Wendeschneidplatten ausgetauscht werden müssen.

Entsprechend einer weiteren bevorzugten Ausgestaltung der Erfindung werden bei dem erfindungsgemäßen Verfahren die Stirnseiten, d. h. die Planenden an der Flanschseite und der Zapfenseite der Kurbelwelle, auf einem dem Drehzentrum vorgelagerten Fräszentrum auf Fertigmaß mittels Fräsen hergestellt. Hier werden zur späteren Aufnahme im Drehzentrum und den Schleifmaschinen auch Zentrierbohrungen eingebracht.

Vorzugsweise wird nach dem Grobschleifen ein Härten und/oder Rollen von Radien und/oder Bohren von Ölkanälen und/oder Nitrieren durchgeführt. Zweckmäßigerweise werden diese zusätzlichen Schritte, welche zur Komplettbearbeitung der Kurbelwelle selbstverständlich hinzugehören, vor deren Fertigbearbeitung realisiert.

Vorzugsweise wird am Ende des Drehens der Planschultern der zentrischen Zapfen, d. h. in unmittelbarem Anschluss an das Drehen dieser Planschultern, ein Freistich mit denselben Drehwerkzeugen sozusagen in einem Zuge gedreht, welcher den Übergang zwischen den Planschultern und der Oberfläche der zentrischen Zapfen, welche sich im Wesentlichen senkrecht zu den Planschultern erstreckt, erzeugt. Diese Freistiche begrenzen den Bereich der zentrischen Zapfen, welcher die unmittelbare Lageroberfläche darstellt.

Beispielsweise kann eine Fertigungslinie bereitgestellt werden, mittels welcher eine Komplettbearbeitung zumindest von unbearbeiteten zentrischen Zapfen und Hublagerzapfen und deren jeweiligen, die Zapfen umgebenden, d. h. zwischen sich einschließenden Planschultern geschmiedeter oder gegossener Rohlinge einer Kurbelwelle durchgeführt wird. Unter Komplettbearbeitung soll in diesem Zusammenhang zumindest die komplette Bearbeitung der unbearbeiteten zentrischen Zapfen und Hublagerzapfen und deren jeweilige Planschultern, ausgehen von einem geschmiedeten oder gegossenen Rohling einer Kurbelwelle, verstanden werden. Beispielsweise weist die Fertigungslinie ein Drehzentrum auf, in welchem die zu bearbeitende Kurbelwelle aufgespannt ist. Das Drehzentrum der Fertigungslinie weist einen linienförmigen, sich koaxial zur Längsachse der Kurbelwelle erstreckenden Träger auf, an welchem bzw. auf welchem eine solche Anzahl von Drehwerkzeugen angebracht ist, dass zumindest eine Mehrzahl von Planschultern von Hauptlagerstellen bzw. zentrischen Zapfen bereichen gleichzeitig drehbar, zumindest vordrehbar, ist. Die Planschultern der Hauptlagerstellen sollen also möglichst gleichzeitig bearbeitet und möglichst gleichzeitig fertiggestellt werden. Die Drehwerkzeuge sind dabei so ausgelegt, dass zumindest ein Vordrehvorgang durchführbar ist. Unter Vordrehvorgang wird dabei verstanden, dass vom Rohling ein möglichst großer Materialabtrag entfernt wird, welcher allenfalls lediglich ein gegenüber dem Fertigmaß vorhandenes sehr geringes Aufmaß belässt, das im Wege der späteren Fertigbearbeitung ein deutlich verringertes Zerspanvolumen und verringerte Bearbeitungskräfte erfordert, deren Einleitung in die Kurbelwelle somit bei der Fertigbearbeitung verringerte Biegekräfte bzw. -momente zur Folge haben.

Zur Fertigungslinie gehört zumindest auch eine dem Drehzentrum nachgeordnete Grobschleifmaschine, deren Grobschleifscheibe eine Breite aufweist, welche geringer ist als der Abstand zwischen den Planschultern, zwischen denen sich der zu schleifende zentrische Zapfen erstreckt. Diese geringere Breite der Grobschleifscheibe bedeutet, dass nur noch der unmittelbare Lagerbereich geschliffen wird, wodurch sich beim Schleifen ein Linienkontakt ergibt, welcher gut kühl- und schmierbar ist, sodass einerseits die Schleifkräfte moderat sind und andererseits auch ein gutes Schleifergebnis bezüglich der zu schleifenden Oberfläche erreicht werden kann. Durch diese verbesserten Schleifbedingungen, bei denen die Grobschleifscheibe nicht mehr mit den bereits fertiggedrehten Planschultern der jeweiligen zentrischen Zapfenstelle in Kontakt kommt, kann mit der Grobschleifmaschine bis auf ein geringes Aufmaß das Rohaufmaß der unbearbeiteten Kurbelwelle abgetragen werden. Das geringe Aufmaß ist ein Aufmaß, das lediglich in einer Fertigbearbeitung einer Feinbearbeitung auf Endmaß zugeführt wird. Dadurch entlastet die Grobschleifmaschine den nachgeschalteten Fertigschleifprozess erheblich.

Der Vorteil einer derartigen Fertigungslinie besteht darin, dass der ansonsten vorhandene hohe Schleifscheibenverschleiß beim Schruppschleifen bzw. Vorschleifen der Planschultern nicht mehr auftritt, weil dieser Teil der Vorbearbeitung auf dem Drehzentrum durch die Drehwerkzeuge gesondert realisiert wird. Da die Planschultern der zentrischen Zapfen bzw. der Hauptlager-stellen erheblich größer sind als die der Hublagerstellen, ist der gravierende Einfluss auf den Verschleiß der Schleifscheiben durch diese Fertigungslinie viel stärker vermindert als beim Schleifen der Planschultern der Hublagerstellen. Dies kann im Interesse einer Gesamtökonomie der Komplettbearbeitung von Kurbelwellen in Kauf genommen werden. Beispielsweise weisen bei PKW-Kurbelwellen die Planseiten an den Hauptlagerstellen eine radiale Höhe von etwa 12 mm auf, wohingegen die Planseiten an den Hublagerstellen lediglich eine Höhe von ca. 5 mm aufweisen. Diese Zahlen sind selbstverständlich beispielhaft und variieren von Kurbelwelle zur Kurbelwelle, sollen jedoch lediglich die Relation zwischen der Höhe der Planschultern der Hauptlagerstellen und der der Hublagerstellen verdeutlichen.

Um eine hohe Fertigungseffizienz zu realisieren, weist die Fertigungslinie vorzugsweise auf dem Träger an dem Drehzentrum eine solche Anzahl von Drehwerkzeugen auf, welche der Anzahl der Planschultern der Hauptlagerstellen entspricht. Die Drehwerkzeuge sind vorzugsweise individuell voreinstellbar, so dass in einem einzigen Drehvorgang die gewünschten Endmaße erzielt werden, und zwar entweder die Endmaße für das Vordrehen oder die Endmaße für das Fertigdrehen.

Vorzugsweise sind auf dem Drehzentrum ein erster und ein zweiter Träger vorgesehen, welche mit ihrer Längsachse parallel zueinander und koaxial zur Längsachse der Kurbelwelle angeordnet sind, wobei der zweite Träger sich auf einer zum ersten Träger gegenüberliegenden Seite der Kurbelwelle befindet. Beide Träger weisen ebenfalls eine Vielzahl von Drehwerkzeugen auf, welche insbesondere einer der Anzahl von Planschultern der Hauptlagerstellen entsprechenden Anzahl entspricht. Diese auf den Trägem angeordneten Drehwerkzeuge sind gleichzeitig mit den Planschultern in Eingriff bringbar.

Vorzugsweise weisen die Drehwerkzeuge eine Form auf, mittels welcher nicht nur die Planschultern drehbar sind, sondern mittels welcher auch die neben dem eigentlichen Lagerbereich der zentrischen Zapfen im Übergang zwischen Planschulter und Durchmesserbereich vorhandene Unterschneidung als Freistich fertigdrehbar sind. Dies hat den Vorteil, dass in einem einzigen Arbeitsgang des Drehens sozusagen in einem Zuge nicht nur die Planschulter, sondern auch dieser Freistich mitgefertigt werden kann. Gemäß einer Weiterbildung der Erfindung weisen die Drehwerkzeuge vorzugsweise Wendeschneidplatten aus Hartmetall auf. Und noch weiter bevorzugt weisen die Drehwerkzeuge Wendeschneidplatten auf, welche aus polykristallinem Diamant bestehen. Der Vorteil von polykristallinem Diamant besteht darin, dass die Standzeit erhöht wird, mithin der Fertigungsprozess kostenmäßig optimiert werden kann, wobei der Gewinn an Standzeit auf die Gesamtkosten des Fertigungsprozesses gerechnet höher ist als der Verlust durch die höheren Kosten der Wendeschneidplatten im Vergleich zu Wendeschneidplatten aus Hartmetall.

Bei der Fertigungslinie ist der Grobschleifmaschine 4 vorzugsweise eine Fertigschielfmaschine 18 nachgeordnet. Auf dieser Fertigschleifmaschine 18, welche so ausgebildet ist, dass ein durch die Grobschfeifmaschine 4 belassenes, relativ geringes Aufmaß 23, abschleifbar ist, sind die zentrischen Zapfen 10 sowie die Hublagerzapfen 11 auf Endmaß, vorzugsweise in einem Zuge, fertigschleifbar. Vorzugsweise sind auf dieser Fertigschleifmaschine auch die Hublagerplanschultern 12 in eben solcher Weise fertigschleifbar, sofern diese auf der Grobschleifmaschine noch nicht auf Endmaß geschliffen worden sind. Dies wäre beispielsweise dann möglich, wenn an die Hublagerplanschultern 12 keine besonderen Qualitätsanforderungen gestellt werden müssen. Dann kann die Fertigschleifmaschine 18 um den Schritt des Fertigschleifens der Hublagerplanschultern 12 entlastet werden.

Das erfindungsgemäße Verfahren bietet damit ein kostengünstiges, hocheffizientes und den heutigen Genauigkeitsanforderungen entsprechendes Fertigungsverfahren zur Großserienfertigung von Kurbelwellen.

Um die Effektivität bei der Herstellung weiter zu erhöhen, weist die Grobschleifmaschine vorzugsweise eine Anzahl von Grobschleifscheiben auf, welche der Anzahl der grobzuschleifenden zentrischen Zapfen entspricht. Dies ist insbesondere bei den zentrischen Zapfen möglich, welche die Hauptlagerstellen darstellen, da diese zentrischen Hauptlagerstellen möglichst gleiche Abmessungen bezogen auf die gemeinsame Längsachse der Kurbelwelle haben sollen.

Weitere Vorteile und Details des erfindungsgemäßen Fertigungsverfahrens werden nun anhand der beigefügten Zeichnung detailliert erläutert. Es zeigen:
Figur 1 eine prinzipielle Seitenansicht einer Kurbelwelle für einen Vier-Zylinder-Motor;
Figur 2 eine Kurbelwelle gemäß Figur 1 mit prinzipieller Darstellung von erstem und zweitem Träger jeweils mit Drehwerkzeugen;
Figur 2A eine Kurbelwelle gemäß Figur 1 mit prinzipieller Darstellung von erstem und zweitem Träger, auf welchen die Drehwerkzeuge so angeordnet sind, dass ein erstes Set die linke Planschulter dreht, während ein zweites Set die rechte Planschulter dreht;
Figur 2B eine Kurbelwelle gemäß Figur 1 mit prinzipieller Darstellung von erstem und zweitem Träger, wobei jeder Träger eine Gruppe von Drehwerkzeugen zum Drehen einer vorgegebenen Anzahl von Planschultern aufweist;
Figur 3 eine Schnittansicht durch ein Hauptlager einer Kurbelwelle mit gleichzeitig in Eingriff befindlichen, gegenüberliegend angeordneten Drehwerkzeugen zum Drehen einer Planschulter,
Figur 4 in vergrößerter Darstellung die Einzelheit X gemäß Figur 2 bei gerade mit den Planschultern in Eingriff gelangten Drehwerkzeugen;
Figur 5 die Einzelheit X gemäß Figur 2 mit bis in die Freistiche eingearbeiteten Drehwerkzeugen;
Figur 6 die Einzelheit X gemäß Figur 2 nach Beendigung der Drehoperation;
Figur 7 die Kurbelwelle gemäß Figur 1 mit Kennzeichnung der Bereiche zum Schleifen;
Figur 8 die Einzelheit X gemäß Figur 2 mit angeordneter Schleifscheibe im Hauptlagerbereich an der Fertigschleifmaschine;
Figur 9 eine prinzipielle Anordnung der zur Fertigungslinie gehörenden Bearbeitungsmaschinen eines Ausführungsbeispiels; und
Figur 10 eine Darstellung des Freistichbereichs mit zugeordnetem Drehwerkzeug und daran montierter Wendeschneidplatte sowie Rohkontur eines Zapfens.

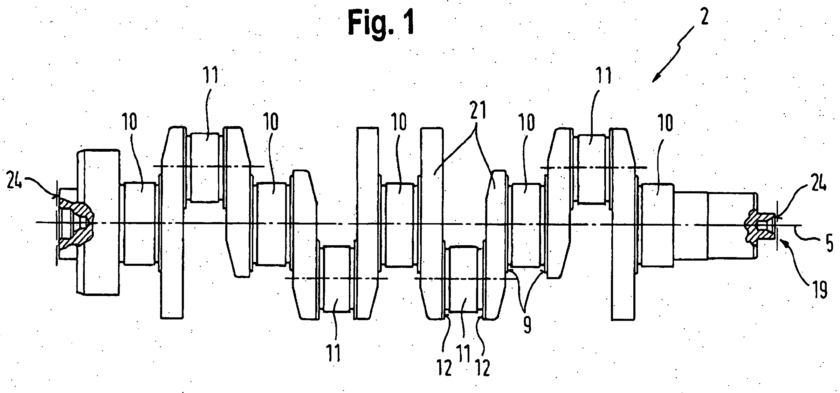

In Figur 1 ist in prinzipieller Seitenansicht eine Vier-Zylinder-Kurbelwelle als Guss- oder Schmiede-Rohteil dargestellt. Diese Kurbelwelle 2 weist fünf Hauptlager 10 und vier Hublager 11 auf, zwischen denen jeweils Wangen 21 angeordnet sind. Beispielhaft werden an dieser Kurbelwelle 2 sowohl die Hauptlager als auch die Hublager bearbeitet. Darüber hinaus sind noch weitere Bereiche vorhanden, welche im Rahmen der Kurbelwellen-Komplettbearbeitung bearbeitet werden müssen, nämlich das Planfräsen der Stirnseiten 24 und die Herstellung von endseitigen Zentrierbohrungen sowie die Bearbeitung der Zapfenseite 19 einschließlich der dortigen Endenbearbeitung. Das Planfräsen der Stirnseiten 24 sowie das Einbringen der Zentrierbohrungen stellt im Rahmen der Komplettbearbeitung der Kurbelwelle auf einer Fertigungslinie gemäß der Erfindung einen vorgelagerten ersten Arbeitsgang dar, welcher auch als Endenbearbeitung bezeichnet wird.

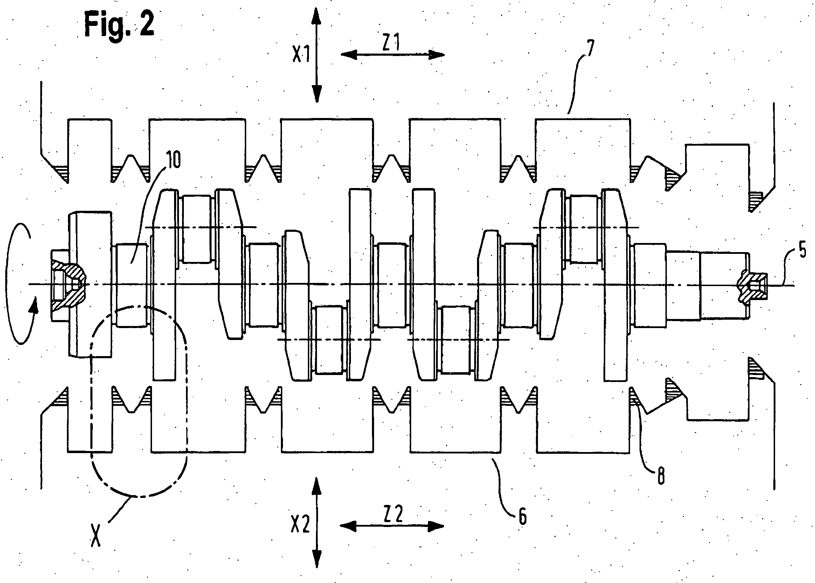

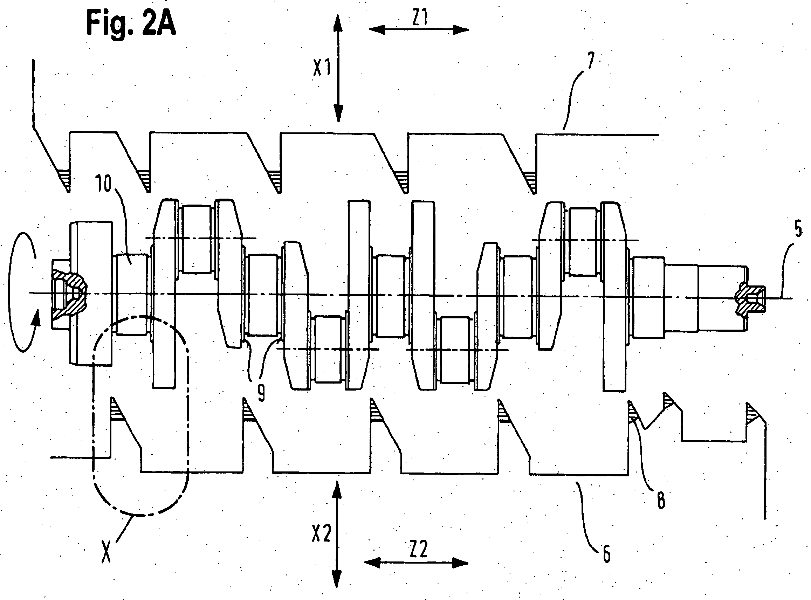

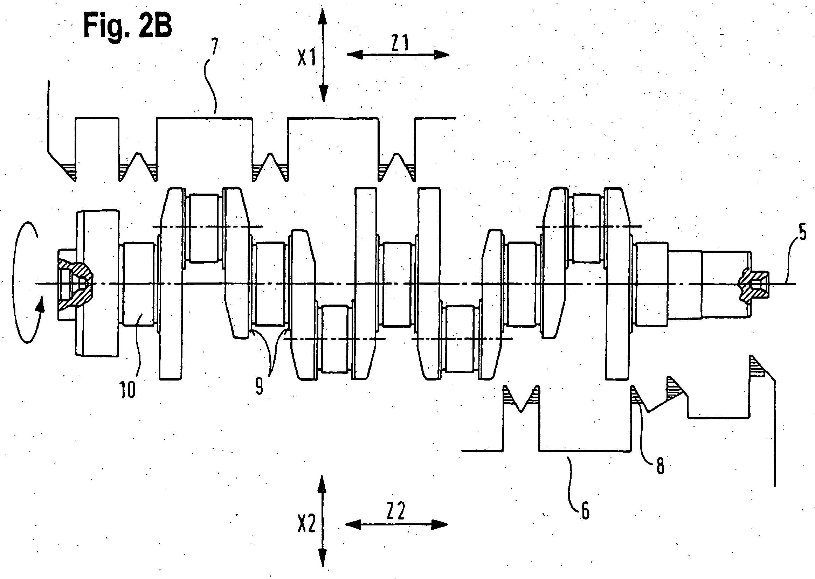

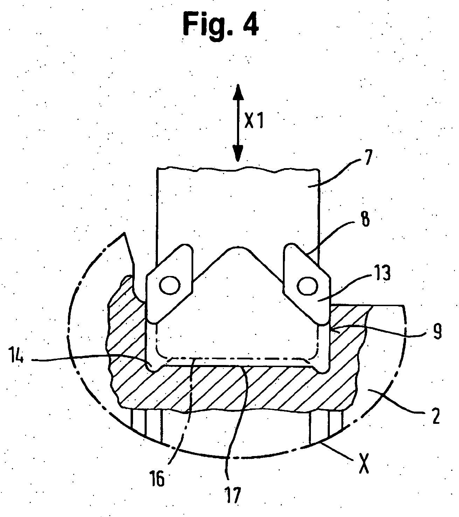

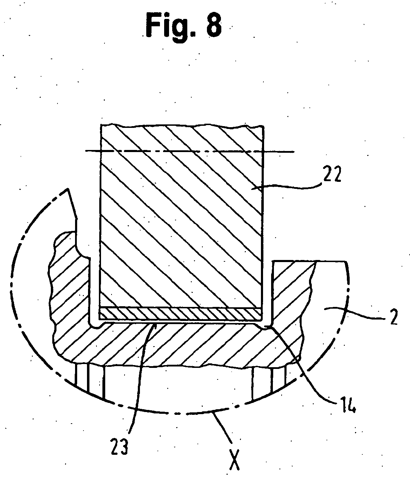

In Figur 2 ist die Kurbelwelle gemäß Figur 1 in prinzipieller Darstellung gezeigt mit auf Trägem 6,7 angeordneten Drehwerkzeugen 8 zum erfindungsgemäßen Drehen der Planschultern 9 mittels des Drehzentrurns der Fertigungslinie. Nachdem im vorgelagerten ersten Arbeitsschritt die Zentrierbohrungen an den Stirnseiten 24 der Kurbelwelle eingebracht sind, wird im Rahrnen der Fertigungslinie die Kurbelwelle 2 in einem Drehzentrum 3 eingespannt, in dem gemäß Figur 2 die linke Seite der Kurbelwelle von einem Werkstückspindelstock mit Werkstückantrieb und die rechte Seite der Kurbelwelle mit einem Reitstock mit Spitze als Abstützung aufgenommen sind. Der Übersichtlichkeit halber sind sowohl Werkstückspindelstock als auch Reitstock nicht mit eingezeichnet. In Draufsicht sind auf jeder Seite der Kurbelwelle in Längserstreckung parallel zur Längsachse 5 der Kurbelwelle 2 ein erster Träger 6 zur Aufnahme von Drehwerkzeugen 8 und ein zweiter Träger 7 ebenfalls zur Aufnahme von Drehwerkzeugen 8 angeordnet. Der erste Träger 6 ist über eine Zustellachse X2 und der zweite Träger 7 über eine Zustellachse X1 auf die Hauptlager 10 der Kurbelwelle 2 zustellbar. Die beiden Werkzeugträger sind in Längsrichtung der Kurbelwelle entlang der CNC-Achsen Z1 und Z2 ebenfalls verfahrbar. Auf jedem Träger befinden sich so viele Drehwerkzeuge 8, wie Planschultern 9 benachbart zu den zentrischen Zapfen wie den Hauptlagern bzw. an den Enden bzw. an der Flanschseite zu drehen sind. Das Drehen der Planschultern 9 der zentrischen Zapfen 10 mit den auf den jeweiligen Trägem 6, 7 angeordneten Drehwerkzeugen 8 stellt den eigentlichen ersten Arbeitsschritt bei der erfindungsgemäßen Komplettbearbeitung von Kurbelwellen dar. Die Drehwerkzeuge 8 sind dabei nur in prinzipieller Draufsicht gezeichnet, wobei in vergrößerter Darstellung der Einzelheit X in den Figuren 4, 5, 6 die Details der Drehoperation und in Figur 8 die Details zur Schleifoperation gezeigt sind. In vergrößerter Darstellung der angegebenen Figuren ist die prinzipielle strukturelle Ausprägung der an den Drehwerkzeuge angeordneten Drehwerkzeuge 8 ersichtlich.

Die Sätze von Drehwerkzeugen sind als Werkzeugssatz wie auch einzeln, voreinstellbar in dem Drehzentrum montiert. Die Anordnung mehrerer Drehwerkzeugen auf einem jeweiligen Träger bedeutet, dass in dem Drehzentrum eine Verstellbarkeit des Trägers in X1- bzw. X2-Richtung sowie in Z1- bzw. Z2-Richtung vorgesehen ist. Die Verstellbarkeit des Trägers in X-Richtung entspricht dabei der Zustellung während des Drehens der Planseiten, während die Verstellbarkeit in Z-Richtung dazu dient, die Drehwerkzeuge bezüglich des Einstechens in den jeweiligen Zapfenbereich zum gleichzeitigen Drehen sich gegenüberliegender Planschultern in deren Längslage exakt zu positionieren. Um die Maschine für verschiedene Kurbelwellen entsprechend flexibel zu gestalten, kann es vorteilhaft sein, den Trägerin mehrere Teile aufzuteilen, wobei dann für jeden Träger eine Verstellbarkeit in einer X- und einer Z-Richtung vorgesehen werden muss. Dadurch wird das Drehzentrum zwar technisch aufwendiger und komplizierter, es bietet aber eine höhere Flexibilität seiner Anwendung auf unterschiedliche Anforderungen bei der Komplettbearbeitung von Kurbelwellen. Die Drehwerkzeuge sind außerdem einzeln einstellbar, was manuell oder automatisch durchgeführt werden kann.

Der Vorteil der Anordnung der Drehwerkzeuge 8 gemäß Figur 2 einander gegenüberliegend besteht darin, dass beim Drehen eingeleitete Kräfte, welche zur Deformation der Kurbelwelle führen können, von dem gegenüberliegenden Pendant aufgenommen bzw. kompensiert werden können. Durch dieses biegungsindifferente Drehen der Planschultern 9 im Bereich der zentrischen Zapfen 10 der Kurbelwelle 2 kann die Genauigkeit der Fertigung der Kurbelwelle weiter verbessert werden. Indem an der Kurbelwelle gleichzeitig die Drehwerkzeuge von zwei gegenüberliegenden Seiten in Eingriff gebracht werden, können neben der erhöhten Genauigkeit bei der Fertigung der Kurbelwelle auch die Bearbeitungszeiten verringert werden.

Figur 2A zeigt eine Anordnung der Drehwerkzeuge auf den beiden als Werkzeugaufnahme dienenden Trägern in der Art, dass immer Planschultern 9 auf ein und derselben Seite der jeweiligen zentrischen Zapfen gedreht werden, wobei der auf dem Träger 6 angeordnete Satz von Drehwerkzeugen die linken Planschultern und der auf dem Träger 7 angeordnete weitere Satz von Drehwerkzeugen die rechten Planschultern der zentrischen Zapfen dreht. Somit lässt sich über die Achsen Z1 und Z2 auch eine Breitenkorrektur der Zapfenstellen bzw. Lagerstellen erreichen. Dies hat den Vorteil, dass die Lagerstellenbreite nicht alleine durch die Voreinstellung der Drehwerkzeuge korrigiert werden muss, sondern auch durch die CNC-Achsen Z1 bzw. Z2.

In Figur 2B ist eine Anordnung der Drehwerkzeuge auf den beiden als Werkzeugaufnahme dienenden Trägern 6, 7 gemäß einem weiteren Ausführungsbeispiel dargestellt, welches sich von dem gemäß Figur 2A dadurch unterscheidet, dass die jeweiligen Träger 6, 7 definierte Gruppen von Drehwerkzeugen 8 tragen, mit denen definierte Gruppen von Planschultern 9 der zentrischen Lager gedreht werden. Die Aufteilung der Gruppen bzw. Arbeitsbereiche für das Drehen der Planschultern kann je nach herzustellender Kurbelwelle so ausgeführt werden, dass sich optimale Technologieparameter in Bezug auf das Drehen ergeben. Auch bei diesen, nicht über die gesamte Länge der Kurbelwelle reichenden Träger können die Drehwerkzeugsätze wiederum über jeweilige CNC-Achsen für eine Zustellung in X1- bzw. X2-Richtung sowie in Z1- bzw. Z2-Richtung in Längsrichtung der Kurbelwelle zugestellt bzw. verstellt bzw. verfahren werden.

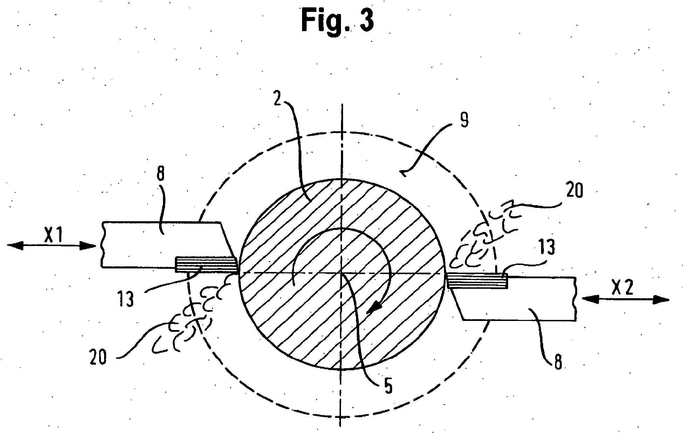

In Figur 3 ist eine Schnittansicht durch den Lagerzapfen eines Hauptlagers der Kurbelwelle 2 dargestellt. Der um die Längsachse 5 der Kurbelwelle angedeutete Pfeil drückt aus, dass die Kurbelwelle zu ihrer Bearbeitung durch den Werkstückspindelstock angetrieben und in Rotation versetzt wird. In dieser Schnittansicht ist die Planschulter 9 gezeigt, in welcher gleichzeitig die gegenüberliegenden Drehwerkzeuge 8 im Eingriff dargestellt sind, so dass von den Drehwerkzeugen 8 jeweils Späne 20 abgeführt werden. Dadurch, dass unter der Vorschubbewegung gemäß den Zustellachsen X1 und X2 beide Drehwerkzeuge gleichzeitig zugestellt werden, ergibt sich beim Drehen ein hohes Spanvolumen unter gleichzeitiger Kompensation der aus der Bearbeitung resultierenden, in die Kurbelwelle eingeleiteten Kräfte.

In Figur 4 ist die Einzelheit X gemäß Figur 2 dargestellt, bei welcher ein Teil des zweiten Trägers 7, welcher an jeder Seite eine Wendeschneidplatte 13 als Drehwerkzeug 8 trägt, dargestellt ist. Die Wendeschneidplatten 13 sind in den Bereich des zentrischen Zapfens 10, welcher ein Hauptlager ist, gerade eingedrungen und haben begonnen/die Planschultern 9 zu drehen. Diese Wendeschneidplatten 13 sind entweder aus Hartmetall- oder aus polykristallinem Diamant ausgebildet. Diese Wendeschneidplatten 13 sind voreinstellbar, d.h. sie sind auf das zu drehende Maß so einstellbar, dass bei einmaligem Einstechen in den Lagerbereich die Planschultern 9 auf das gewünschte Maß gedreht werden können. Das gewünschte Maß ist dabei das Maß nach dem Drehvorgang. Die Wendeschneidplatten 13 weisen an ihrer vorderen in Richtung des Eindringens gerichteten Nase eine Formgebung auf, mit welcherder Freistich 14 im Übergang zwischen den Planschultern 9 und dem eigentlichen Lagerbereich des Hauptlägers gedreht wird. Dieser Freistich 14 bildet einen Hinterschnitt zur unmittelbaren Lageroberfläche im Durchmesserbereich des Lagers. Die dargestellte vordere Seite des zweiten Trägers 7, welche die zwei Wendeschneidplatten 13 trägt, weist in der Mitte eine Aussparung auf, so dass im unmittelbaren Lagerbereich des Hauptlagers 10 nach dem Drehen der Planseiten 9 und der Freistiche 14 die Rohkontur 16 im Bereich des Lagers noch erhalten bleibt. Der Drehvorgang der Planschultern 9 sowie der Freistiche 14 ist also vom Herstellen der gewünschten Lagerfläche im Durchmesserbereich entkoppelt.

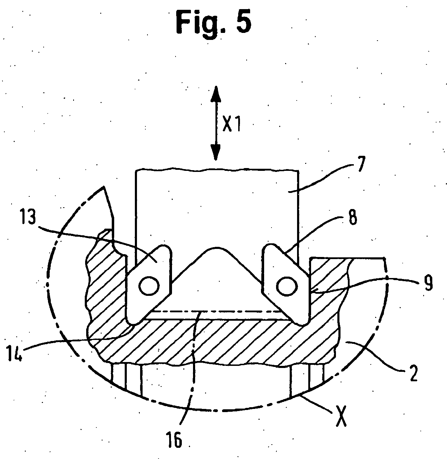

In Figur 5 schließlich ist die Einzelheit X gemäß Figur 2 dargestellt, bei welcher jedoch im Gegensatz zu der Darstellung gemäß Figur 4 der zweite Träger 7 in Richtung der Zustellachse X1 soweit zugestellt worden ist, dass die Planschultern 9 durch die voreingestellten Wendeschneidplatten 13 auf das gewünschte Zwischen- oder Endmaß gedreht worden sind, wobei gleichzeitig die Freistiche 14 neben der unmittelbaren Lagerfläche im Durchmesserbereich des Hauptlagers gedreht worden sind. Der sich an diesen Arbeitsschritt anschließende Schleifvorgang kann unter vollkommener Entlastung der Seitenflächen der Schleifscheibe 22 durchgeführt werden. Damit kann sich die Schleifscheibe 22, ohne zwischen den Planschultern beim Schleifen der eigentlichen Zapfenoberfläche geklemmt zu werden, innerhalb des Bereiches der Lagerstelle zumindest um einen gewissen Betrag in Z-Richtung bewegen, ohne jedoch die Planschultern überhaupt zu berühren. Damit entfällt die für eine Schleifscheibe extreme Belastung an den Außenkanten und Seitenflanken, wie sie beim Einstechschleifen auftritt.

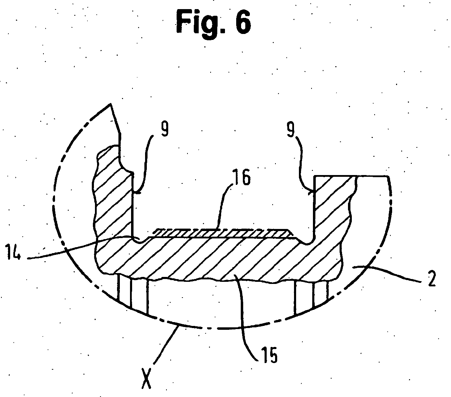

In Figur 6 schließlich ist die Einzelheit X gemäß Figur 5 dargestellt, wobei zur besseren Übersicht der Träger mit den Drehwerkzeugen nicht dargestellt ist, weil dieser beispielsweise wieder zurückgefahren worden ist. Deutlich erkennbar ist im unmittelbaren Lagerbereich zwischen den Freistichen 14, dass die Rohkontur 16 noch erhalten ist, d.h. die Zapfenoberfläche des Lagerzapfens 15 ist überhaupt noch nicht bearbeitet. Auf ein Zwischenmaß oder auch auf ein Endmaß - je nach gewünschter Fertigungstechnologie - gedreht wurden beide Planschultern 9.

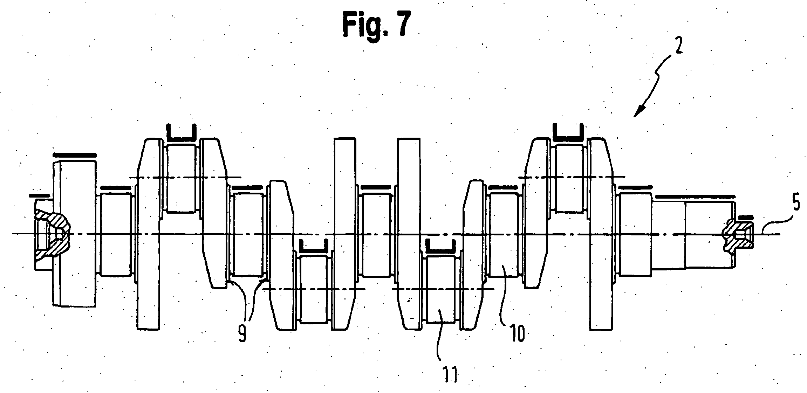

In Figur 7 ist die Kurbelwelle 2 gemäß Figur 1 dargestellt unter Kennzeichnung sämtlicher zum Schleifen vorgesehenen Flächen. Während der Schleifbearbeitung wird die Kurbelwelle 2 um ihre Längsachse 5 in an sich bekannter Weise rotatorisch angetrieben. Nach Abschluss des dem Grobschleifen vorgelagerten Drehens der Planschultern 9 der zentrischen Zapfen 10 vorzugsweise auf Fertigmaß (Fertigdrehen) erfolgt in diesem Arbeitsschritt das Schleifen der in Figur 7 angegebenen Bereiche mittels einer Grobschleifmaschine 4 zum Grobschleifen der zentrischen Zapfen- sowie der Hublagerstellen.

Nachdem die Planschultern 9 im Rahmen des ersten Arbeitsschrittes gedreht worden sind, wird die Belastung der Schleifscheibe beim Grobschleifen der Zapfen wesentlich geringer, weil das Planschleifen der hohen Planschultern an den zentrischen Zapfen zumindest beim Vorschleifen komplett entfällt. Damit werden auch die bereits beim Grobschleifen in die Kurbelwelle 2 eingebrachten Belastungen deutlich verringert, weshalb während der Bearbeitung eine negative Biegebeeinflussung der Kurbelwelle 2 minimiert wird.

Diese entgegen dem technologischen Trend vorgenommene erneute Aufteilung/Zerstückelung des Schleifvorganges in einen separaten, dem Schleifvorgang vorgelagerten Drehvorgang bzw. das Ersetzen des Wirbelfräsens oder Drehräumens durch das Drehen der Planschultern 9 führt zu einem um das Bearbeiten der Planschultern 9 verringerten Grob- bzw. SchruppSchleifaufwand, wodurch die Standzeit der Schleifscheiben erheblich erhöht und gleichzeitig die Bearbeitungsqualität der Kurbelwellen verbessert werden.

Figur 8 schließlich zeigt die Einzelheit X gemäß Figur 2 mit angeordneter Schleifscheibe 22 zum Grobschleifen der Durchmesserbereiche der Lagerzapfen. Im vorliegenden Fall handelt es sich um das Schleifen des Lagerzapfens 15 eines Hauptlagers. Für die Schleifscheiben 22 werden zum Grobschleifen der Zapfen der Guss- oder Stahlkurbelwellen vorzugsweise galvanisch belegte Schleifscheiben eingesetzt. Zum Fertigschleifen der jeweiligen Lagerstellen werden vorzugsweise CBN-Schleifscheiben mit keramischer Bindung verwendet. Diese haben jeweils eine hohe Standzeit und erlauben zudem eine hohe Schleifgenauigkeit, weshalb sie für den Einsatz im Rahmen einer Fertigungslinie zur Kurbelwellenfertigung prädestiniert sind. Wegen des "Herauslösens" der Bearbeitung der Planschultern 9 aus dem Grobschleifvorgang können die Grobschleifscheiben viel näher an das Endmaß heranschleifen, weshalb das Schleifen ein aufmaßoptimiertes Bearbeiten darstellt.

Die Anordnung der Drehwerkzeuge in gegenüberliegendem Eingriff während des Drehens sichert darüber hinaus die Kompensation von ansonsten durch das Bearbeitungswerkzeug in das zu bearbeitende Werkstück eingebrachten Belastungen, so dass sich dies insgesamt positiv auf die Herstellungsgenauigkeit auswirkt.

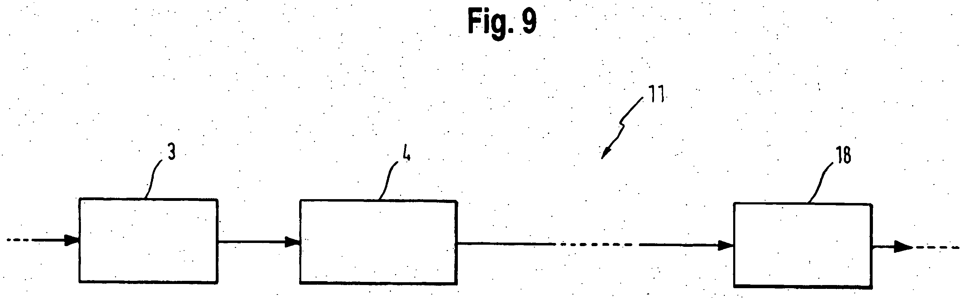

Figur 9 zeit in schematischer Darstellung den Grundaufbau einer Fertigungslinie 1 zur Durchführung des erfindungsgemäßen Verfahrens. Die wesentlichen Bestandteile dieser Fertigungslinie 1 sind die Drehmaschine bzw. das Drehzentrum zum Drehen der planseitigen Partien in Kombination mit einer Grobschleifmaschine. Die Aufteilung der Bearbeitungen wird in der Art vorgenommen, dass beim Drehen die Planschultern der zentrischen Zapfen gedreht werden. Diese sind durch Schleifen schwierig herstellbar, da sich hier keine akzeptablen Standzeiten für die Schleifscheibe erreichen lassen. Durch diese Kombination der Drehmaschine und der Grobschleifmaschine lassen sich die Maschinen jeweils den Prozessen zuordnen, die mit der jeweiligen Technologie besser, kostengünstiger und vorteilhafter für die Qualität der Kurbelwelle umsetzbar sind. Auf der Drehmaschine werden aus diesem Grund die Planseiten der zentrischen Zapfen und der Freistich der Hauptlagerstellen bearbeitet. Es werden also die Schleifscheiben, mit welchen die zentrischen Zapfen wie die Hauptlager geschliffen werden, verschleißmäßig deutlich entlastet.

Indem auf der Grobschleifmaschine das Aufmaß am Kurbelwellenrohling weitestgehend im Wege eine Schruppschleifens abgetragen wird und das Bearbeiten der Planschultern der Hauptlager aus dem im Stand der Technik üblichen Schleifprozess herausgetrennt und durch Drehen erfolgt, bleibt für die zweite Schleifmaschine, die Fertigschleifmaschine, nur noch ein geringst mögliches Aufmaß vorzugsweise nur noch zur Feinbearbeitung übrig, so dass die Standzeit der Schleifscheibe einer Fertigschleifmaschine gegenüber einer Schleifscheibe einer üblichen Schleifmaschine im Stand der Technik, mittels welcher fertiggeschliffen wird, deutlich erhöht wird. Darüber hinaus werden während der-Fertigbearbeitung die durch das Bearbeitungswerkzeug in die Kurbelwelle eingeleiteten Kräfte verringert, was sich positiv auf die Genauigkeit der Kurbelwelle auswirkt.

Der Fertigungslinie 1 ist eine Fräsmaschine vorgeschaltet, mittels welcher die Stirnseiten 24 der Kurbelwelle insbesondere plangefräst werden. Ebenso vorbereitend werden Zentrierbohrungen eingebracht.

Nach der Endenbearbeitung der Planenden an der Kurbelwelle und dem Einbringen der Zentrierbohrungen erfolgen das Drehen auf einem Drehzentrum und das Grobschleifen der Kurbelwelle auf einer Grobschleifmaschine. Nach dieser Bearbeitung erfolgen an der Kurbelwelle noch weitere Bearbeitungsschritte wie beispielsweise Tieflochbohren, Rollierenden von Einstichen, Wärmebehandlungen (wie Härten und Anlassen), Endenbearbeitungen usw. (dargestellt durch die Pünktchen in Fig. 9). Je nach Ausführung der Kurbelwelle können diese Bearbeitungsprozesse variieren, d. h. es können Bearbeitungsprozesse entfallen oder hinzukommen. Nach diesen Bearbeitungsprozessen werden die Kurbelwellen dann an ihren Haupt- und Hublagern sowie an deren Enden (Flansch/Zapfen) fertiggeschliffen. Nach dem Fertigschleifen erfolgen noch weitere Bearbeitungen wie beispielsweise Wuchten, Superfinishen, Endmessen usw.

Durch diese Anordnung bzw. das erfindungsgemäße Verfahren wird also eine verringerte Maschinenanzahl gegenüber Fertigungslinien gemäß dem Stand der Technik benötigt. Durch die Reduzierung der Anzahl der Maschinen kann der technologische Aufwand und können damit die Herstellungskosten für die Kurbelwellen in einer Großserienfertigung weiter reduziert werden. Dies wirkt sich gleichermaßen positiv aus auf eine Senkung der Kosten für die Handlingsysteme sowie die Kühl- und Schmierstoffaufbereitungsanlagen.

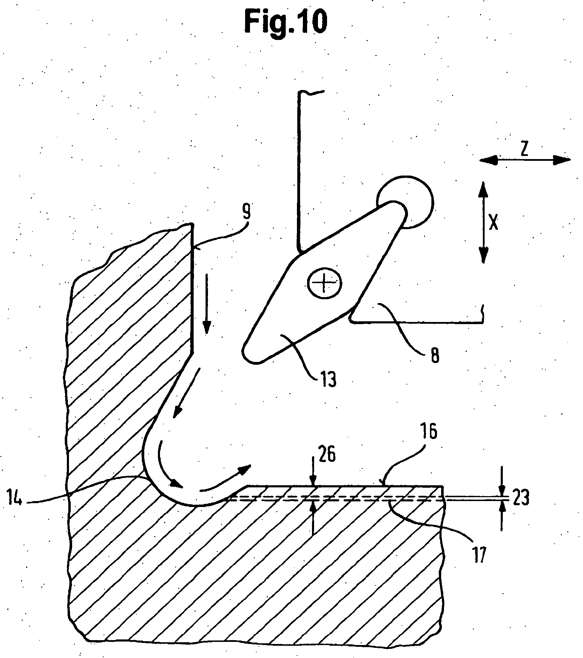

Das erfindungsgemäße Verfahren sowie deren Realisierung auf der erfindungsgemäßen Fertigungslinie werden zusammenfassend nun nochmals unter Bezugnahme auf Figur 10 erläutert. Figur 10 stellt eine vergrößerte Darstellung eines Teilbereiches eines zentrischen Zapfens dar, bei welchem ein Drehwerkzeug 8 mit einer Wendeschneidplatte 13 vergrößert dargestellt ist. Mit dem Drehwerkzeug 8, welches auf einer CNC-Achse sowohl in X- als auch in Z-Richtung zustellbar ist, werden die Planschultern 9 neben der unmittelbaren Lagerstelle der zentrischen Zapfen gedreht. Vorzugsweise werden die Planschultern 9 fertiggedreht, sodass bei späteren Bearbeitungsschritten diese Planschultern 9 nicht mehr geschliffen werden müssen. Für die eigentliche Lagerstelle ist die Rohkontur 16 eingezeichnet, welche sich mit einem Aufmaß 26 von der Endkontur 17 unterscheidet. Ebenfalls eingetragen ist das Aufmaß 23, welches sich nach dem Grobschleifen ergibt. Daraus ist ersichtlich, dass der überwiegende Teil des Aufmaßes 26 im Wege des Grobschleifens abgetragen wird, wobei das Grobschleifen so weit wie möglich an das Endmaß, d. h. die Endkontur 17 herangeführt werden kann. Dies ist dadurch möglich, dass die Schleifscheiben zum Grobschleifen keine wie im Stand der Technik übliche starke Verschleißabnutzung und Belastung erfährt, wo sowohl die Planseiten als auch die Zapfen geschliffen werden. Indem durch das Grobschleifen ein aufmaßoptimiertes Schleifen der Gestalt realisiert wird dass nur noch ein geringes Aufmaß 23 gegenüber der Endkontur 17 verbleiben kann, wird bereits durch das Grobschleifen sichergestellt, das beim später durchgeführten Fertigschleifen die Belastungen der Fertigschleifscheiben einerseits geringer sind und andererseits neben deren Standzeiterhöhung die beim Schleifen in das Werkstück eingetragene Belastung geringer ist, sodass beim Fertigschleifen ebenfalls eine höhere Genauigkeit der Kurbelwelle erzielt werden kann.

Die eingetragenen CNC-Achsen X und Z ermöglichen es, dass nach Abschluss des Drehens der Planschulter 9 über eine interpolierende Bewegung der X- und Z-Achse der Freistich 14 neben der unmittelbaren Lagerstelle gedreht werden kann. Dies ist besonders nach der Anordnung der Drehwerkzeuge nach Figur 2A vorteilhaft möglich.

Mit dem erfindungsgemäßen Verfahren und der dieses Verfahren realisierenden Fertigungslinie werden erhebliche Einsparungen bei der Großserienfertigung von Kurbelwellen erreicht, wobei neben der deutlichen Erhöhung der Taktzahl die Standzeiten der eingesetzten Schleifwerkzeuge deutlich erhöht werden und darüber hinaus die Qualität der Genauigkeit der hergestellten Kurbelwelle gegenüber üblichen Verfahren nochmals deutlich angehoben wird.

### Bezugszeichenliste

- 1: Fertigungslinie.
- 2: Kurbelwelle
- 3: Drehzentrum
- 4: Grobschleifmaschine
- 5: Längsachse der Kurbelwelle
- 6: erster Träger
- 7: zweiter Träger
- 8: Drehwerkzeug
- 9: Planschulter zentrischer Zapfen
- 10: zentrischer Zapfen
- 11: Hublagerzapfen
- 12: Planschulter Hublager
- 13: Wendeschneidplatte
- 14: Freistich
- 15: Lagerzapfen
- 16: Rohkontur
- 17: Endkontur
- 18: Fertigschielfmaschine
- 19: Zapfenseite
- 20: Späne
- 21: Wangen der Kurbelwelle
- 22: Schleifscheibe
- 23: Aufmaß nach Grobschleifen
- 24: Stirnseiten der Kurbelwelle
- 25: Zentrierbohrungen
- 26: Gesamtaufmaß

## Patentansprüche

1. Verfahren zur Komplettbearbeitung zumindest von unbearbeiteten zentrischen Zapfen (10) und Hublagerzapfen (11) und deren jeweiligen, die Zapfen umgebenden Planschultern (9, 12) geschmiedeter oder gegossener Rohlinge einer Kurbelwelle (2), bei welchem
a) zunächst die den zentrischen Zapfen zugeordneten Planschultern (9) gedrehet werden;
b) anschließend die zentrischen Zapfen (10) ohne deren Planschultern (9) und die Hublagerzapfen (11) mit deren Planschultern (12) grobgeschliffen werden, wobei ein nach dem Grobschleifen der Zapfen (10,11) verbleibendes, für das Fertigschleifen erforderliches Aufmaß (23) kleiner ist als das verbleibende Aufmaß, das erforderlich ist, wenn die Grobbearbeitung der Planschultern nach dem üblichen Vorgehen durch Grobschleifen, Drehräumen oder Wirbelfräsen erfolgt; und
c) danach die zentrischen Zapfen (10) und die Hublagerzapfen (11) von dem durch das Grobschleifen erreichten kleineren Aufmaß (23) auf Endmaß fertiggeschliffen werden.

2. Verfahren nach Anspruch 1, bei welchem die Planschultern (12) der Hublager von dem durch das Grobschleifen belassenen kleineren Aufmaß auf Endmaß fertiggeschliffen werden.

3. Verfahren nach Anspruch 1 oder 2, bei welchem die Planschultern (9) einer Mehrzahl von, insbesondere aller, zentrischen Zapfen (10) gleichzeitig gedreht werden.

4. Verfahren nach einem der Ansprüche 1 bis 3, bei welchem die Planschultern (9) der zentrischen Zapfen (10) gruppenweise gedreht werden, wobei zumindest eine erste Gruppe von einer ersten Seite der Kurbelwelle (2) aus und eine zweite Gruppe von einer zweiten, der ersten Seite gegenüberliegenden Seite der Kurbelwelle (2) aus gedreht werden.

5. Verfahren nach Anspruch 4, bei welchem die erste und die zweite Gruppe jeweils alle Planschultern (9) der zentrischen Zapfen (10) umfassen.

6. Verfahren nach einem der Ansprüche 1 bis 5, bei welchem die zentrischen Zapfen (10) gleichzeitig geschliffen werden.

7. Verfahren nach einem der Ansprüche 1 bis 6, bei welchem das Drehen mittels Werkzeugen mit Wendeschneidplatten (13) aus Hartmetall oder polykristallinem Diamant und das Schleifen mittels galvanisch beschichteter oder keramisch gebundener CBN-Schleifscheiben (22) durchgeführt wird.

8. Verfahren nach einem der Ansprüche 1 bis 7, bei welchem vor dem Drehen beide Stirnseiten (24) des Rohlings der Kurbelwelle (2) bearbeitet, und Zentrierbohrungen (25) in diese Stirnseiten (24) eingebracht werden.

9. Verfahren nach einem der Ansprüche 1 bis 8, bei welchem nach dem Grobschleifen ein Härten und/oder-Rollen von Radien und/oder Bohren von Ölkanälen und/oder Nitrieren durchgeführt werden/wird.

10. Verfahren nach einem der Ansprüche 1 bis 9, bei welchem im Anschluss an das Drehen der Planschultern (9) der zentrischen Zapfen (10) im Übergang von den Planschultern (9) zur im Wesentlichen senkrecht dazu sich erstreckenden Oberfläche der Zapfen (10) jeweilige Freistiche (14) gleichzeitig gedreht werden.

## Claims

1. Method for completely machining at least unmachined central journals (10) and crankpin journals (11) and their respective flat shoulders (9, 12) of forged or cast blanks of a crankshaft (2) that surround the journals, in which method:
a) firstly the flat shoulders (6) associated with the central journals are turned;
b) then the central journals (10) without their flat shoulders (9) and the crankpin journals (11) with their flat shoulders (12) are rough-ground, wherein an oversize (23) remaining after the rough grinding of the journals (10, 11) and necessary for the finish grinding is smaller than the remaining oversize that is necessary if the rough grinding of the flat shoulders takes place after the usual procedure by rough grinding, turn broaching or trochoidal milling; and
c) after that the central journals (10) and the crankpin journals (11) are finish-ground to the final dimension from the smaller oversize (23) achieved by the rough grinding.

2. Method according to Claim 1, in which the flat shoulders (12) of the pin bearings are finish-ground to the final dimension from the smaller oversize left by the rough grinding.

3. Method according to Claim 1 or 2, in which the flat shoulders (9) of a plurality of central journals (10), in particular all of them, are turned simultaneously.

4. Method according to one of Claims 1 to 3, in which the flat shoulders (9) of the central journals (10) are turned in groups, wherein at least a first group is turned from a first side of the crankshaft (2) and a second group is turned from a second side of the crankshaft (2) opposite from the first side.

5. Method according to Claim 4, in which the first group and the second group each comprises all the flat shoulders (9) of the central journals (10).

6. Method according to one of Claims 1 to 5, in which the central journals (10) are ground simultaneously.

7. Method according to one of Claims 1 to 6, in which the turning is carried out by means of tools with indexable inserts (13) made from hard metal or polycrystalline diamond and the grinding is carried out by means of galvanically coated or ceramically bonded CBN grinding wheels (22).

8. Method according to one of Claims 1 to 7, in which, before the turning, both end faces (24) of the blank of the crankshaft (2) are machined, and centring holes (25) are introduced into these end faces (24).

9. Method according to one of Claims 1 to 8, in which, after the rough grinding, a hardening and/or rolling of radii and/or drilling of oil channels and/or nitriding is/are carried out.

10. Method according to one of Claims 1 to 9, in which, following the turning of the flat shoulders (9) of the central journals (10), respective relief grooves (14) are turned simultaneously in the transition from the flat shoulders (9) to the surface of the journals (10) extending substantially perpendicular thereto.

## Revendications

1. Procédé pour l'usinage complet au moins de tourillons centraux non usinés (10) et de manetons (11) et de leurs épaulements plans (9, 12) respectifs, entourant les tourillons, d'ébauches respectives forgées ou coulées d'un vilebrequin (2) dans lequel
a) premièrement les épaulements plans (6) associés aux tourillons centraux sont tournés ;
b) ensuite, les tourillons centraux (10), sans leurs épaulements plans (9), et les manetons (11) avec leurs épaulements plans (12) sont dégrossis, une dimension de base (23) nécessaire pour la rectification de finition, existant après le dégrossissage des tourillons et des manetons (10, 11), étant inférieure à la dimension de base existante qui est nécessaire lorsque l'usinage grossier des épaulements plans conformément à la procédure usuelle est réalisé par dégrossissage, brochage par rotation ou fraisage en tourbillon ; et
c) ensuite les tourillons centraux (10) et les manetons (11) sont soumis à une rectification de finition à la dimension finale à partir de la dimension de base (23) inférieure obtenue par dégrossissage.

2. Procédé selon la revendication 1, dans lequel les épaulements plans (12) des paliers de levage sont soumis à une rectification de finition à la dimension finale à partir de la dimension de base inférieure résultant après le dégrossissage.

3. Procédé selon la revendication 1 ou 2, dans lequel les épaulements plans (9) d'une pluralité de tourillons centraux (10), notamment de la totalité des tourillons centraux, sont tournés simultanément.

4. Procédé selon l'une quelconque des revendications 1 à 3, dans lequel les épaulements plans (9) des tourillons centraux (10) sont tournés par groupes, au moins un premier groupe provenant d'un premier côté du vilebrequin (2) et un deuxième groupe provenant d'un deuxième côté du vilebrequin (2) opposé au premier côté étant tournés.

5. Procédé selon la revendication 4, dans lequel le premier et le deuxième groupe comprennent à chaque fois tous les épaulements plans (9) des tourillons centraux (10).

6. Procédé selon l'une quelconque des revendications 1 à 5, dans lequel les tourillons centraux (10) sont rectifiés simultanément.

7. Procédé selon l'une quelconque des revendications 1 à 6, dans lequel le tournage est réalisé au moyen d'outils comprenant des plaquettes de coupe amovibles (13) en métal dur ou en diamant polycristallin et la rectification est effectuée au moyen de meules (22) CBN à revêtement galvanique ou à liant céramique.

8. Procédé selon l'une quelconque des revendications 1 à 7, dans lequel avant le tournage, les deux côtés frontaux (24) de l'ébauche de vilebrequin (2) sont usinés, et des alésages centraux (25) sont pratiqués dans ces côtés frontaux (24).

9. Procédé selon l'une quelconque des revendications 1 à 8, dans lequel après le dégrossissage, un durcissage et/ou un roulage de rayons et/ou un perçage de canaux d'huile et/ou une nitruration est/sont effectués.

10. Procédé selon l'une quelconque des revendications 1 à 9, dans lequel, à la suite du tournage des épaulements plans (9) des tourillons centraux (10), dans la transition des épaulements plans (9) à la surface des tourillons (10) s'étendant essentiellement perpendiculairement à ceux-ci, des dégagements par rainure respectifs (14) sont tournés simultanément.
